# EUROPEAN PATENT SPECIFICATION

(11) **EP 4 299 996 B1**
(45) Date of publication and mention of the grant of the patent: **10.12.2025**
(21) Application number: 22187825.9
(22) Date of filing: 29.07.2022
(51) Int. Cl.: F24F 8/108, F24F 8/22, F24F 8/30, F24F 11/58, F24F 11/70, F24F 11/62

(54) **CENTRAL CONTROLLER FOR COMPLETELY CLEANING INDOOR AIR POLLUTION**
ZENTRALE STEUERUNG ZUR VOLLSTÄNDIGEN REINIGUNG VON INNENRAUMLUFTVERSCHMUTZUNG
CONTRÔLEUR CENTRAL POUR LE NETTOYAGE COMPLET DE LA POLLUTION DE L'AIR INTÉRIEUR

(30) Priority: 30.06.2022 TW 111124545
(43) Date of publication of application: 03.01.2024
(73) Proprietor: Microjet Technology Co., Ltd., Hsinchu (TW)
(72) Inventor: Mou, Hao-Jan, Hsinchu (TW); Wu, Chin-Chuan, Hsinchu (TW); Han, Yung-Lung, Hsinchu (TW); Huang, Chi-Feng, Hsinchu (TW)
(74) Representative: Uexküll & Stolberg

(56) References cited:
- EP-A1- 3 581 854
- WO-A1-2016/175473
- WO-A1-2018/109522
- US-A1- 2021 254 845
- US-A1- 2022 196 269

## Description

### FIELD OF THE INVENTION

The present invention relates to a central controller for detecting and completely cleaning air pollution, and more particularly to a central controller for completely cleaning indoor air pollution.

### BACKGROUND OF THE INVENTION

In recent years, people pay more and more attention to the air quality around their living environment. Particulate matter (PM), such as PM₁, PM_{2.5} and PM₁₀, carbon monoxide, carbon dioxide, total volatile organic compounds (TVOC), formaldehyde and even suspended particles, aerosols, bacteria and viruses contained in the air and exposed in the environment might affect human health, and even endanger people's life.

However, it is not easy to control the indoor air quality. In addition to the air quality of the outdoor space, the air environmental conditions and pollution sources, especially the dusts originated from poor air circulation in the indoor space, are the major factors that affect indoor air quality. In order to quickly improve the indoor air quality, several devices, such as air conditioners or air purifiers are utilized to achieve the purpose of improving the indoor air quality.

Therefore, in order to intelligently and quickly detect the location of the indoor air pollution, effectively remove the indoor air pollution to form a clean and safe breathing air state, instantly monitor the indoor air quality, and quickly purify the indoor air when the indoor air quality is poor, it becomes important to find a solution to intelligently generate an airflow convection in the indoor space, quickly detect and locate the air pollution, and effectively control plural physical and/or chemical filtration devices to implement an intelligent airflow convection to accelerate airflow in the desired direction(s), and filter and remove air pollution sources in the indoor space by locating the air pollution, draining the air pollution and completely cleaning the air pollution in the indoor space so as to achieve a clean and safe breathing air state. US 2022/196269 A1 relates to a method of filtering indoor air pollution for filtering air pollutant in an indoor space. A plurality of gas processing devices is provided for detecting and filtering air pollutant, and transmitting device inner gas detection data. A connection device is provided for receiving and transmitting the device inner gas detection data to a cloud processing device. The cloud processing device intelligently compares and selects to drive a closest gas processing device to filter the air pollutant and drive the gas processing devices to determine a convection path and generate at least one airflow. The airflow accelerates the movement of the air pollutant along the convection path to move the air pollutant towards the closest processing device adjacent to the air pollutant for filtering, so that the air pollutant in the indoor space can be filtered rapidly to obtain a clean, safe and breathable air condition.

### SUMMARY OF THE INVENTION

One object of the present invention is to provide a central controller for completely cleaning indoor air pollution. The central controller is disposed in an indoor space to detect air pollution in the indoor space and generate air pollution data, and to process the air pollution data using wireless communication. Then, the characteristic, the concentration and the location of the air pollution in the indoor space are intelligently determined, and the fan is intelligently driven to generate a directional air convection. Through the physical or chemical filtration elements, the air pollution in the indoor space is removed, so that the indoor air quality is promoted to form a clean and safe breathing air state in the indoor space.

In accordance with the present invention, a central controller for completely cleaning indoor air pollution is provided, as defined in claim 1. In the following passages, the term "disclosure" refers to the invention as described in the description; the scope of protection is defined by the appended claims.

### BRIEF DESCRIPTION OF THE DRAWINGS

The above contents of the present disclosure will become more readily apparent to those ordinarily skilled in the art after reviewing the following detailed description and accompanying drawings, in which:
FIG. 1A is a schematic view illustrating a central controller set in a filtration device for completely cleaning indoor air pollution according to an embodiment of the present disclosure;
FIG. 1B is a schematic view illustrating the filter element of the central controller for completely cleaning indoor air pollution according to the embodiment of the present disclosure;
FIG. 2 is a schematic view illustrating the central controller implemented in an indoor space for completely cleaning indoor air pollution according to the embodiment of the present disclosure;
FIG. 3 is a schematic perspective view illustrating the gas detection device of the central controller for completely cleaning indoor air pollution according to the embodiment of the present disclosure;
FIG. 4A is a schematic perspective view (1) illustrating the gas detection main part of the central controller for completely cleaning indoor air pollution according to the embodiment of the present disclosure;
FIG. 4B is a schematic perspective view (2) illustrating the gas detection main part of the central controller for completely cleaning indoor air pollution according to the embodiment of the present disclosure;
FIG. 4C is an exploded view illustrating the gas detection main part of the central controller for completely cleaning indoor air pollution according to the embodiment of the present disclosure;
FIG. 5A is a schematic perspective view (1) illustrating the base of the central controller for completely cleaning indoor air pollution according to the embodiment of the present disclosure;
FIG. 5B is a schematic perspective view (2) illustrating the base of the central controller for completely cleaning indoor air pollution according to the embodiment of the present disclosure;
FIG. 6 is a schematic view (3) illustrating the base of the central controller for completely cleaning indoor air pollution according to the embodiment of the present disclosure;
FIG. 7A is a schematic exploded view illustrating the combination of the piezoelectric actuator and the base of the central controller for completely cleaning indoor air pollution according to the embodiment of the present disclosure;
FIG. 7B is a schematic perspective view illustrating the combination of the piezoelectric actuator and the base of the central controller for completely cleaning indoor air pollution according to the embodiment of the present disclosure;
FIG. 8A is a schematic exploded view (1) illustrating the piezoelectric actuator of the central controller for completely cleaning indoor air pollution according to the embodiment of the present disclosure;
FIG. 8B is a schematic exploded view (2) illustrating the piezoelectric actuator of the central controller for completely cleaning indoor air pollution according to the embodiment of the present disclosure;
FIG. 9A is a schematic cross-sectional view (1) illustrating an action of the piezoelectric actuator of the central controller for completely cleaning indoor air pollution according to the embodiment of the present disclosure;
FIG. 9B is a schematic cross-sectional view (2) illustrating of the piezoelectric actuator of the central controller for completely cleaning indoor air pollution according to the embodiment of the present disclosure;
FIG. 9C is a schematic cross-sectional view (3) illustrating an action of the piezoelectric actuator of the central controller for completely cleaning indoor air pollution according to the embodiment of the present disclosure;
FIG. 10A is a schematic cross-sectional view (1) illustrating the gas detection main part of the central controller for completely cleaning indoor air pollution according to the embodiment of the present disclosure;
FIG. 10B is a schematic cross-sectional view (2) illustrating the gas detection main part of the central controller for completely cleaning indoor air pollution according to the embodiment of the present disclosure; and
FIG. 10C is a schematic cross-sectional view (3) illustrating the gas detection main part of the central controller for completely cleaning indoor air pollution according to the embodiment of the present disclosure; and
FIG. 11 is a block diagram showing the signal transmission of the gas detection device of the central controller for completely cleaning indoor air pollution according to the embodiment of the present disclosure.

### DETAILED DESCRIPTION OF THE PREFERRED EMBODIMENT

The present disclosure will now be described more specifically with reference to the following embodiments. It is to be noted that the following descriptions of preferred embodiments of this invention are presented herein for purpose of illustration and description only. It is not intended to be exhaustive or to be limited to the precise form disclosed.

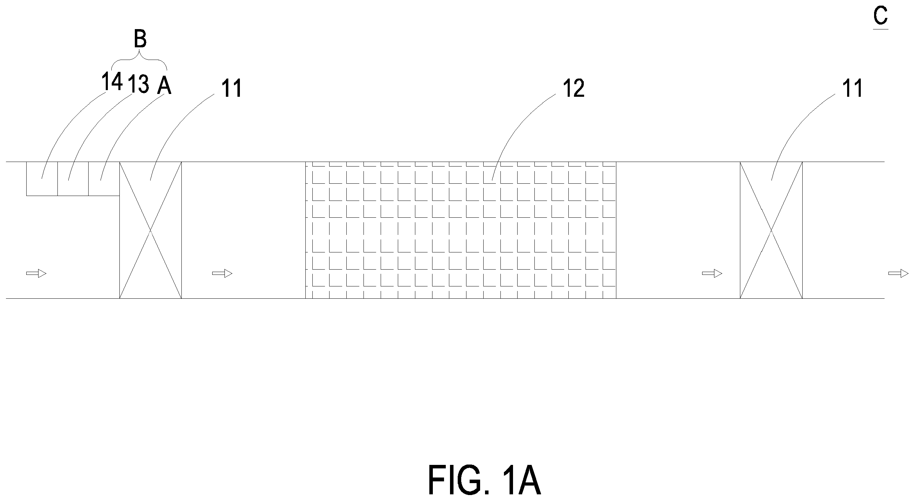

Referring to FIG. 1A, the present disclosure provides a central controller B for completely cleaning indoor air pollution. In the embodiment, the central controller B is disposed in an indoor space to detect air pollution and output air pollution data. Moreover, intelligence operations are implemented in accordance with the air pollution data by the central controller B to determine a location of the air pollution, and a controlling instruction is intelligently and selectively issued through a wireless communication transmission to enable a plurality of physical filtration devices C or a plurality of chemical filtration devices C. In the embodiment, each of the physical filtration device C or the chemical filtration device C includes at least one fan 11 and at least one filter element 12, wherein the fan 11 is driven upon receiving the controlling instruction, so as to generate an airflow convection in a direction. The air pollution is removed through the filter element 12, so that the air pollution in the indoor space is completely cleaned to form a clean and safe breathing air state.

Notably, in the embodiment, the air pollution is at least one selected from the group consisting of particulate matter, carbon monoxide, carbon dioxide, ozone, sulfur dioxide, nitrogen dioxide, lead, total volatile organic compounds (TVOC), formaldehyde, bacteria, fungi, virus and a combination thereof.

In the embodiment, the central controller B includes a central processing unit 13, a communication interface 14 and a gas detection device A. The gas detection device A detects the air pollution, provides the air pollution data and outputs the air pollution data to the central processing unit 13. The central processing unit 13 implements the intelligence operations in accordance with the air pollution data to determine the location of the air pollution, and intelligently and selectively issues the controlling instruction through the communication interface 14 to the plurality of the physical filtration device C or the chemical filtration device C.

Notably, the communication interface 14 is connected through a wired communication transmission or a wireless communication transmission. Preferably but not exclusively, the wireless communication transmission is one selected from the group consisting of a Wi-Fi communication transmission, a Bluetooth communication transmission, a radio frequency identification communication transmission and a near field communication (NFC) transmission.

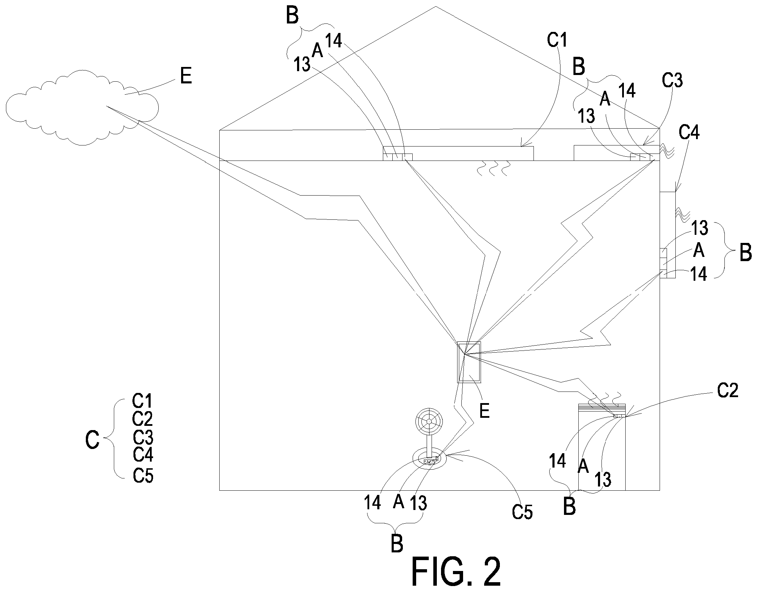

Please refer to FIG. 2. In the embodiment, the central processing unit 13 implements the intelligence operations through a connection of a cloud device E, so that artificial intelligence operations and big data comparison are implemented through the cloud device E to determine the location of the air pollution in the indoor space. The controlling instruction is intelligently and selectively issued through the communication interface 14 to the plurality of the physical filtration device C or the plurality of chemical filtration device C.

In an embodiment, the central controller B may be integrated and installed in other physical filtration devices C or chemical filtration devices C including the fan 11 and the filter element 12. Preferably but not exclusively, the physical filtration device C or the chemical filtration device C is a fresh air fan C1, a purifier C2, an exhaust fan C3, a range hood C4 or an electric fan C5. In the embodiment, the central controller B is installed on the filter device C as an example for illustration. The central controller B is installed on the filter device C, and the air pollution data is detected by the gas detection device A of the central controller B. The intelligence operations are implemented through the central processing unit 13. The artificial intelligence operations and big data comparison are implemented through the connection of the cloud device E, so as to determine the location of the air pollution in the indoor space. Moreover, the controlling instruction is intelligently and selectively issued through the communication interface 14 to the plurality of the physical filtration device C or the plurality of chemical filtration device C.

In addition, notably, the gas detection device A is disposed in the central controller B to detect the characteristic and the concentration of the air pollution. The gas detection device A is used for detecting and outputting the air pollution data, and implementing the intelligence operations through the central processing unit 13. The air pollution data detected by the gas detection devices A of the plurality of central controller B (disposed on different filtration device C) in the indoor space are received and compared through the connection of the cloud device E. In that, the artificial intelligence operations and big data comparison are implemented through the cloud device E to determine the location of the air pollution in the indoor space. The controlling instruction is intelligently and selectively issued and transmitted through the wireless communication transmission to drive the plurality of physical filtration devices C or the plurality of chemical filtration device C. That is, the air pollution data detected and provided by each gas detection device A are compared to determine the value of the air pollution data through the intelligence operations, so that the location of the air pollution is determined, and the controlling instruction is transmitted through the wireless communication transmission to drive the plurality of physical filtration devices C or the plurality of chemical filtration device C.

Notably, each of the physical filtration device C or the chemical filtration device C includes at least one fan 11 and at least one filter element 12. As shown in FIG. 1A, the fan 11 has the function of intaking and exhausting gas in both directions. In an airflow path (the direction shown by the arrow), the fan 11 is disposed at the front side of the filter element 12, or the fan 11 is disposed at the rear side of the filter element 12. As shown in FIG. 1A, the fans 11 are arranged at the front and rear sides of the filter element 12. Certainly, in other embodiments, the arrangement of the fans 11 is designed and adjustable according to the practical requirements.

Notably, the central processing unit 13 of the central controller B intelligently and selectively issues the controlling instruction through the communication interface 14 to enable a part of the plurality of physical filtration devices C or the plurality of chemical filtration devices C adjacent to the location of the air pollution first, and then intelligently and selectively issues the controlling instruction through the communication interface 14 to enable the rest of the plurality of physical filtration devices C or the plurality of chemical filtration devices C, so as to generate the airflow convection, whereby the flow of the air pollution is accelerated to drain through the airflow convection toward the plurality of physical filtration device C or the plurality of chemical filtration devices C adjacent to the location of the air pollution for filtering and cleaning the air pollution. Through the filter element 12, the air pollution in the indoor space is filtered and completely cleaned to form a clean and safe breathing air state. That is, while the plurality of gas detection devices A are connected through the cloud device E for outputting the detected air pollution data and implementing the artificial intelligence operations and big data comparison, a part of the physical filtration devices C or the chemical filtration devices C adjacent to the location of the air pollution receive the controlling instruction first, so as to be enabled for operation, and an airflow is generated first. Then, the controlling instruction is intelligently and selectively issued to enable the rest of the physical filtration devices B or the chemical filtration devices B in accordance with the position farther from the location of the air pollution for operation, so that the airflow is guided toward a direction. Whereby the flow of the air pollution is accelerated to drain by the airflow toward the filter elements 12 of the physical filtration devices C or the chemical filtration devices C adjacent to the location of the air pollution for filtering and completely cleaning, and the effects of filtering and completely cleaning the air pollution in the indoor space are achieved to form a clean and safe breathing air state.

Notably, what the air pollution is "completely cleaned" or "completely clean" means that the air pollution is filtered and cleaned to reach a safety detection value. Preferably but not exclusively, in some embodiments, the safety detection value is zero to form a clean and safe breathing air state. Preferably but not exclusively, the safety detection value may also include at least one selected from the group consisting of a concentration of PM2.5 which is less than 35 µg/m³, a concentration of carbon dioxide which is less than 1000 ppm, a concentration of total volatile organic compounds which is less than 0.56 ppm, a concentration of formaldehyde which is less than 0.08 ppm, a colony-forming unit of bacteria which is less than 1500 CFU/m³, a colony-forming unit of fungi which is less than 1000 CFU/m³, a concentration of sulfur dioxide which is less than 0.075 ppm, a concentration of nitrogen dioxide which is less than 0.1 ppm, a concentration of carbon monoxide which is less than 9 ppm, a concentration of ozone which is less than 0.06 ppm, and a concentration of lead which is less than 0.15 µg/m³.

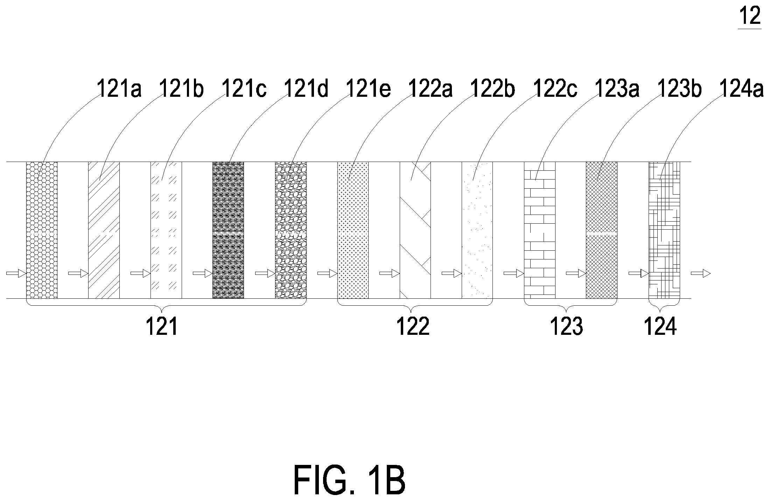

Please refer to FIG. 1B. In the embodiment, the filter element 12 of the physical filtration device is a blocking and absorbing filter screen 124 to form a physical removal device. Preferably but not exclusively, the filter screen 124 is a high efficiency particulate air (HEPA) filter screen 124a, which is configured to absorb the chemical smoke, the bacteria, the dust particles and the pollen contained in the air pollution, so that the air pollution introduced into the filter element 12 is filtered and purified to achieve the effect of filtering and purification. In the embodiment, the filter element 12 of the chemical filtration device is coated with a decomposition layer 121 to form a chemical removal device. Preferably but not exclusively, the decomposition layer 121 is an activated carbon 121a, which is configured to remove the organic and inorganic substances in the air pollution and remove the colored and odorous substances. Preferably but not exclusively, the decomposition layer 121 is a cleansing factor containing chlorine dioxide layer 121b, which is configured to inhibit viruses, bacteria, fungi, influenza A, influenza B, enterovirus and norovirus in the air pollution introduced into the filter element 12, and the inhibition ratio can reach 99%, thereby reducing the cross-infection of viruses. Preferably but not exclusively, the decomposition layer 121 is an herbal protective layer 121c, which is configured to resist allergy effectively and destroy a surface protein of influenza virus (H1N1) passing therethrough. Preferably but not exclusively, the decomposition layer 121 is a silver ion 121d, which is configured to inhibit viruses, bacteria and fungi contained in the air pollution. Preferably but not exclusively, the decomposition layer 121 is a zeolite 121e, which is configured to remove ammonia nitrogen, heavy metals, organic pollutants, Escherichia coli, phenol, chloroform and anionic surfactants. In an embodiment, the filter element 12 of the chemical filtration device B is combined with a light irradiation element 122 to form a chemical removal device. Preferably but not exclusively, the light irradiation element 122 is a photo-catalyst unit including a photo catalyst 122a and an ultraviolet lamp 122b. When the photo catalyst 122a is irradiated by the ultraviolet lamp 122b, the light energy is converted into the chemical energy to decompose harmful substances contained in the air pollution and disinfect bacteria contained in the air pollution, so as to achieve the effects of filtering and purifying. Preferably but not exclusively, the light irradiation element 122 is a photo-plasma unit including a nanometer irradiation tube 122c. When the air pollution is irradiated by the nanometer irradiation tube 122c, oxygen molecules and water molecules contained in the air pollution are decomposed into high oxidizing photo-plasma, and generates an ion flow capable of destroying organic molecules. In that, volatile formaldehyde, volatile toluene and volatile organic compounds (VOC) contained in the air pollution are decomposed into water and carbon dioxide, so as to achieve the effects of filtering and purifying. In an embodiment, the filter element 12 of the chemical filtration device is combined with a decomposition unit 123 to form a chemical removal device. Preferably but not exclusively, the decomposition unit 123 is a negative ion unit 123a. It makes the suspended particles contained in the air pollution to carry with positive charge and adhered to a dust collecting plate carry with negative charges, so as to achieve the effects of filtering and purifying the air pollution introduced. Preferably but not exclusively, the decomposition unit 123 is a plasma ion unit 123b. Through the plasma ions, the oxygen molecules and the water molecules contained in the air pollution are decomposed into positive hydrogen ions (H⁺) and negative oxygen ions (O₂⁻), and the substances attached with water around the ions are adhered on the surface of viruses and bacteria and converted into OH radicals with extremely strong oxidizing power, thereby removing hydrogen (H) from the protein on the surface of viruses and bacteria, and thus decomposing (oxidizing) the protein, so as to filter the introduced air pollution and achieve the effects of filtering and purifying.

In order to understand the implementation method of the present disclosure, the structure of the gas detection device A of the central controller B is described in detail as follows.

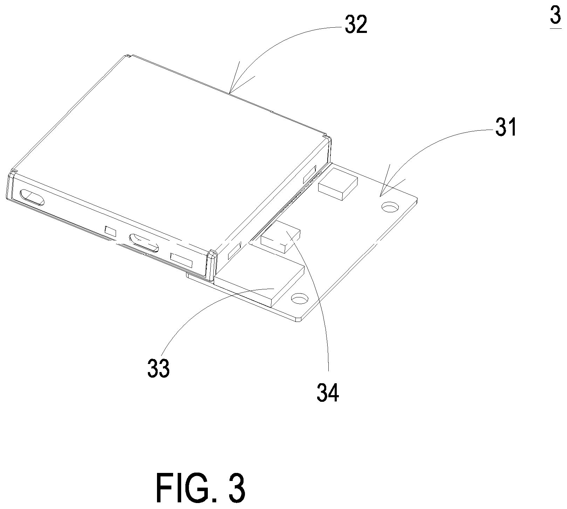

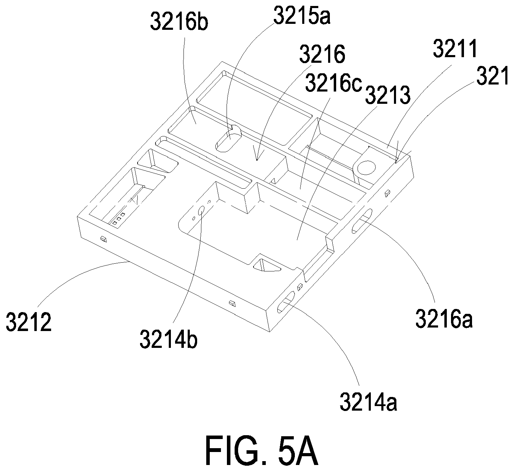

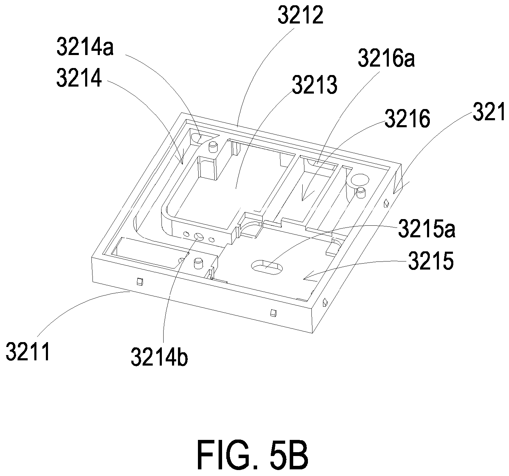

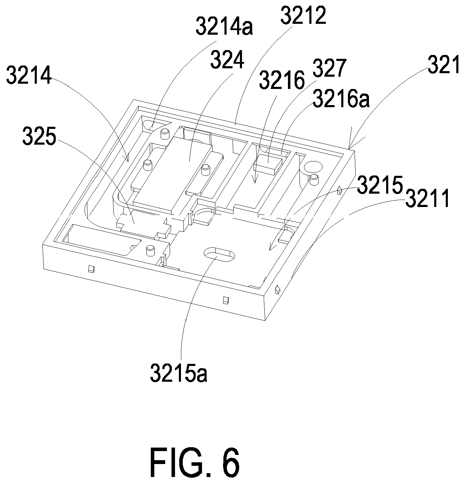

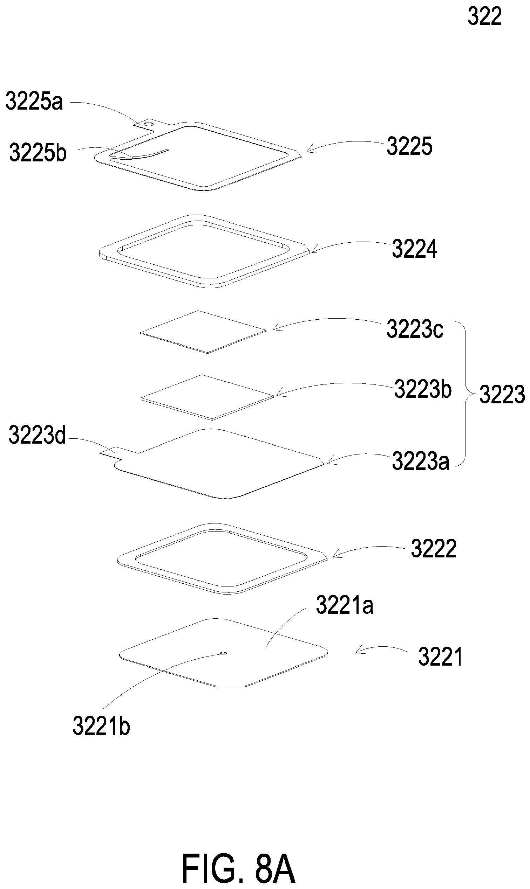

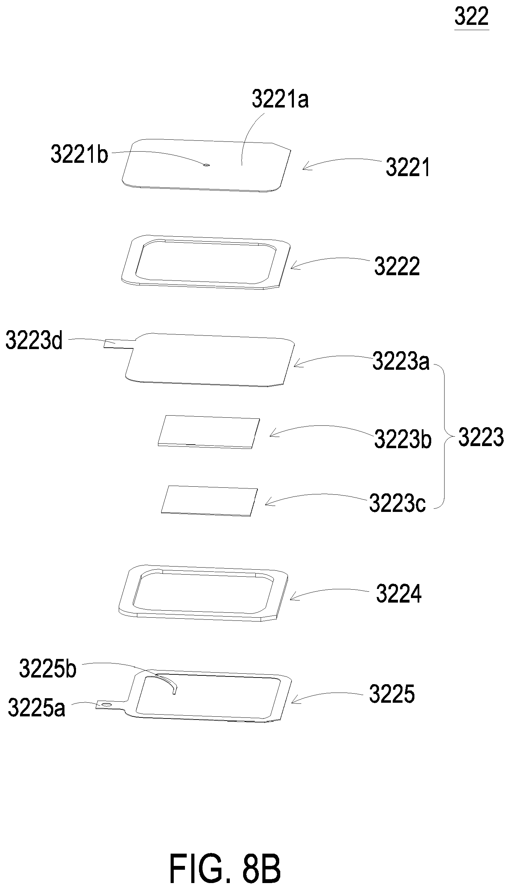

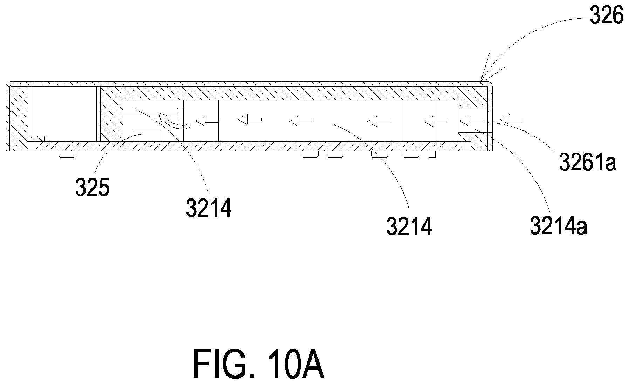

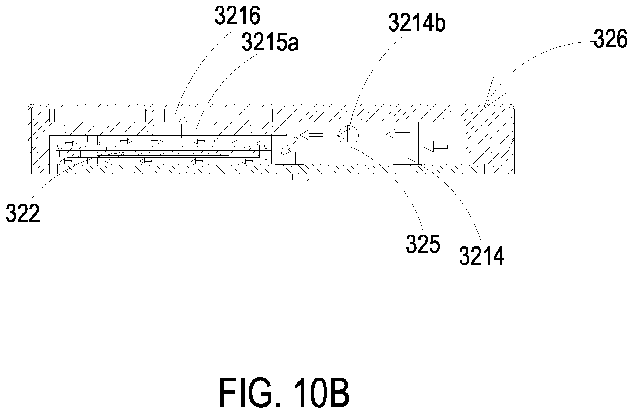

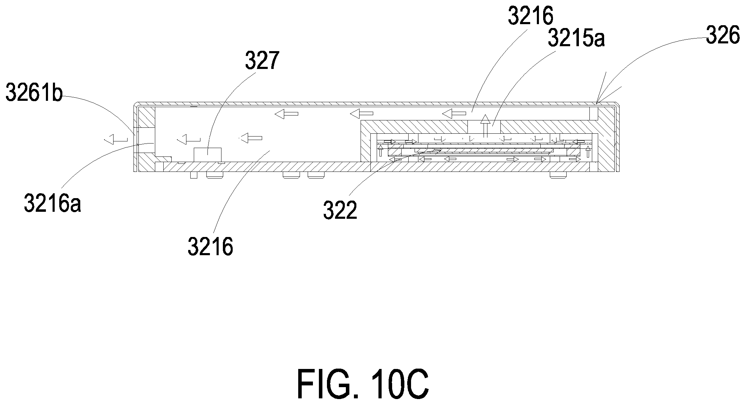

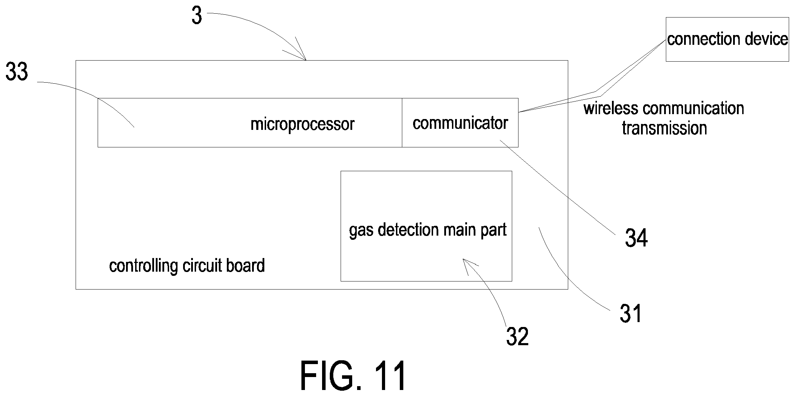

Please refer to FIG. 3 to FIG. 11. In the embodiment, the gas detection device 3 includes a controlling circuit board 31, a gas detection main part 32, a microprocessor 33 and a communicator 34. The gas detection main part 32, the microprocessor 33 and the communicator 34 are integrally packaged on the controlling circuit board 31 and electrically connected to each other. Preferably but not exclusively, the microprocessor 33 and the communicator 34 are disposed on the controlling circuit board 31, and the microprocessor 33 controls the driving signal of the gas detection main part 32 to enable the detection. The gas detection main part 32 detects the air pollution and outputs a detection signal. The microprocessor 33 receives the detection signal for calculating, processing and outputting, so that the microprocessor 33 of the gas detection device 3 generates the air pollution data, which are provided to the communicator 34, and externally transmitted to a connection device through a wireless communication transmission. Preferably but not exclusively, the wireless communication transmission is one selected from the group consisting of a Wi-Fi communication transmission, a Bluetooth communication transmission, a radio frequency identification communication transmission and a near field communication (NFC) transmission.

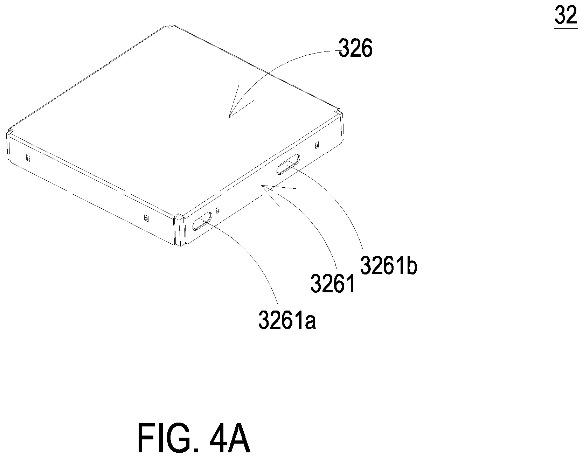

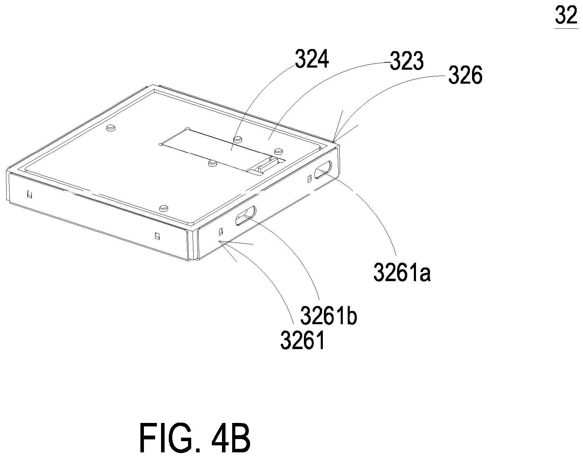

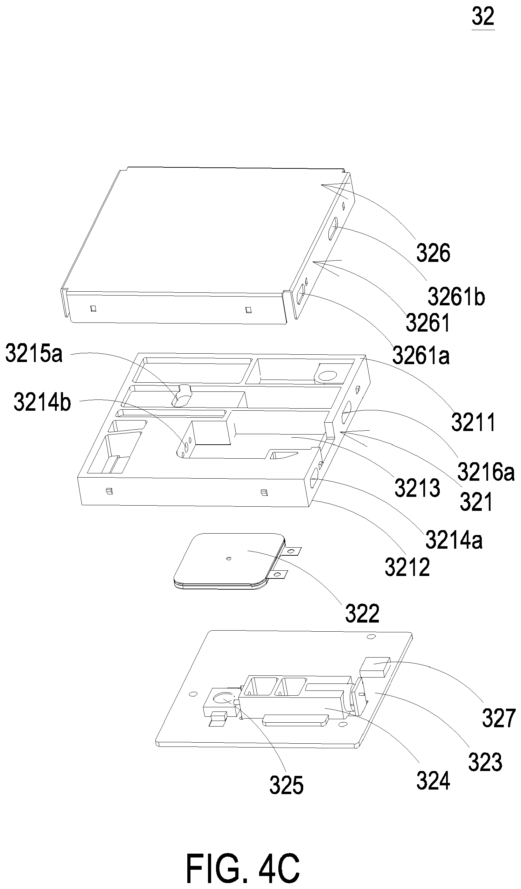

Please refer to FIG. 4A to FIG. 9A. In the embodiment, the gas detection main part 32 includes a base 321, a piezoelectric actuator 322, a driving circuit board 323, a laser component 324, a particulate sensor 325 and an outer cover 326. In the embodiment, the base 321 includes a first surface 3211, a second surface 3212, a laser loading region 3213, a gas-inlet groove 3214, a gas-guiding-component loading region 3215 and a gas-outlet groove 3216. The first surface 3211 and the second surface 3212 are two surfaces opposite to each other. In the embodiment, the laser loading region 3213 for the laser component 324 is hollowed out from the first surface 3211 toward the second surface 3212. The outer cover 326 covers the base 321 and includes a side plate 3261. The side plate 3261 has an inlet opening 3261a and an outlet opening 3261b. The gas-inlet groove 3214 is concavely formed from the second surface 3212 and disposed adjacent to the laser loading region 3213. The gas-inlet groove 3214 includes a gas-inlet 3214a and two lateral walls. The gas-inlet 3214a is in communication with an environment outside the base 321, and is spatially corresponding in position to an inlet opening 3261a of the outer cover 326. Two transparent windows 3214b are opened on the two lateral walls of the gas-inlet groove 3214 and are in communication with the laser loading region 3213. Therefore, the first surface 3211 of the base 321 is covered and attached by the outer cover 326, and the second surface 3212 is covered and attached by the driving circuit board 323, so that an inlet path is defined by the gas-inlet groove 3214.

In the embodiment, the gas-guiding-component loading region 3215 mentioned above is concavely formed from the second surface 3212 and in communication with the gas-inlet groove 3214. A ventilation hole 3215a penetrates a bottom surface of the gas-guiding-component loading region 3215. The gas-guiding-component loading region 3215 includes four positioning protrusions 3215b disposed at four corners of the gas-guiding-component loading region 3215, respectively. In the embodiment, the gas-outlet groove 3216 includes a gas-outlet 3216a, and the gas-outlet 3216a is spatially corresponding to the outlet opening 3261b of the outer cover 326. The gas-outlet groove 3216 includes a first section 3216b and a second section 3216c. The first section 3216b is concavely formed out from the first surface 3211 in a region spatially corresponding to a vertical projection area of the gas-guiding-component loading region 3215. The second section 3216c is hollowed out from the first surface 3211 to the second surface 3212 in a region where the first surface 3211 is extended from the vertical projection area of the gas-guiding-component loading region 3215. The first section 3216b and the second section 3216c are connected to form a stepped structure. Moreover, the first section 3216b of the gas-outlet groove 3216 is in communication with the ventilation hole 3215a of the gas-guiding-component loading region 3215, and the second section 3216c of the gas-outlet groove 3216 is in communication with the gas-outlet 3216a. In that, when first surface 3211 of the base 321 is attached and covered by the outer cover 326 and the second surface 3212 of the base 321 is attached and covered by the driving circuit board 323, the gas-outlet groove 3216 and the driving circuit board 323 collaboratively define an outlet path.

In the embodiment, the laser component 324 and the particulate sensor 325 are disposed on and electrically connected to the driving circuit board 323 and located within the base 321. In order to clearly describe and illustrate the positions of the laser component 324 and the particulate sensor 325 in the base 321, the driving circuit board 323 is intentionally omitted. The laser component 324 is accommodated in the laser loading region 3213 of the base 321, and the particulate sensor 325 is accommodated in the gas-inlet groove 3214 of the base 321 and is aligned to the laser component 324. In addition, the laser component 324 is spatially corresponding to the transparent window 3214b. Therefore, a light beam emitted by the laser component 324 passes through the transparent window 3214b and is irradiated into the gas-inlet groove 3214. A light beam path from the laser component 324 passes through the transparent window 3214b and extends in an orthogonal direction perpendicular to the gas-inlet groove 3214. Preferably but not exclusively, the particulate sensor 325 is used for detecting the suspended particulate information. In the embodiment, a projecting light beam emitted from the laser component 324 passes through the transparent window 3214b and enters the gas-inlet groove 3214 to irradiate the suspended particles contained in the gas passing through the gas-inlet groove 3214. When the suspended particles contained in the gas are irradiated and generate scattered light spots, the scattered light spots are received and calculated by the particulate sensor 325 to obtain the gas detection information. In the embodiment, a gas sensor 327 is positioned and disposed on the driving circuit board 323, electrically connected to the driving circuit board 323, and accommodated in the gas-outlet groove 3216, so as to detect the air pollution introduced into the gas-outlet groove 3216. Preferably but not exclusively, in an embodiment, the gas sensor 327 includes a volatile-organic-compound sensor for detecting the gas information of carbon dioxide (CO₂) or volatile organic compounds (TVOC). Preferably but not exclusively, in an embodiment, the gas sensor 327 includes a formaldehyde sensor for detecting the gas information of formaldehyde (HCHO). Preferably but not exclusively, in an embodiment, the gas sensor 327 includes a bacteria sensor for detecting the gas information of bacteria or fungi. Preferably but not exclusively, in an embodiment, the gas sensor 327 includes a virus sensor for detecting the gas information of virus.

In the embodiment, the piezoelectric actuator 322 is accommodated in the square-shaped gas-guiding-component loading region 3215 of the base 321. In addition, the gas-guiding-component loading region 3215 of the base 321 is in fluid communication with the gas-inlet groove 3214. When the piezoelectric actuator 322 is enabled, the gas in the gas-inlet 3214 is inhaled into the piezoelectric actuator 322, flows through the ventilation hole 3215a of the gas-guiding-component loading region 3215 into the gas-outlet groove 3216. Moreover, the driving circuit board 323 covers the second surface 3212 of the base 321, and the laser component 324 is positioned and disposed on the driving circuit board 323, and is electrically connected to the driving circuit board 323. The particulate sensor 325 is also positioned and disposed on the driving circuit board 323, and is electrically connected to the driving circuit board 323. In that, when the outer cover 326 covers the base 321, the inlet opening 3261a is spatially corresponding to the gas-inlet 3214a of the base 321, and the outlet opening 3261b is spatially corresponding to the gas-outlet 3216a of the base 321.

In the embodiment, the piezoelectric actuator 322 includes a gas-injection plate 3221, a chamber frame 3222, an actuator element 3223, an insulation frame 3224 and a conductive frame 3225. In the embodiment, the gas-injection plate 3221 is made by a flexible material and includes a suspension plate 3221a and a hollow aperture 3221b. The suspension plate 3221a is a sheet structure and is permitted to undergo a bending deformation. Preferably but not exclusively, the shape and the size of the suspension plate 3221a are accommodated in the inner edge of the gas-guiding-component loading region 3215, but not limited thereto. The hollow aperture 3221b passes through a center of the suspension plate 3221a, so as to allow the gas to flow therethrough. Preferably but not exclusively, in the embodiment, the shape of the suspension plate 3221a is selected from the group consisting of a square, a circle, an ellipse, a triangle and a polygon, but not limited thereto.

In the embodiment, the chamber frame 3222 is carried and stacked on the gas-injection plate 3221. In addition, the shape of the chamber frame 3222 is corresponding to the gas-injection plate 3221. The actuator element 3223 is carried and stacked on the chamber frame 3222. A resonance chamber 3226 is collaboratively defined by the actuator element 3223, the chamber frame 3222 and the suspension plate 3221a and is formed between the actuator element 3223, the chamber frame 3222 and the suspension plate 3221a. The insulation frame 3224 is carried and stacked on the actuator element 3223 and the appearance of the insulation frame 3224 is similar to that of the chamber frame 3222. The conductive frame 3225 is carried and stacked on the insulation frame 3224, and the appearance of the conductive frame 3225 is similar to that of the insulation frame 3224. In addition, the conductive frame 3225 includes a conducting pin 3225a and a conducting electrode 3225b. The conducting pin 3225a is extended outwardly from an outer edge of the conductive frame 3225, and the conducting electrode 3225b is extended inwardly from an inner edge of the conductive frame 3225. Moreover, the actuator element 3223 further includes a piezoelectric carrying plate 3223a, an adjusting resonance plate 3223b and a piezoelectric plate 3223c. The piezoelectric carrying plate 3223a is carried and stacked on the chamber frame 3222. The adjusting resonance plate 3223b is carried and stacked on the piezoelectric carrying plate 3223a. The piezoelectric plate 3223c is carried and stacked on the adjusting resonance plate 3223b. The adjusting resonance plate 3223b and the piezoelectric plate 3223c are accommodated in the insulation frame 3224. The conducting electrode 3225b of the conductive frame 3225 is electrically connected to the piezoelectric plate 3223c. In the embodiment, the piezoelectric carrying plate 3223a and the adjusting resonance plate 3223b are made by a conductive material. The piezoelectric carrying plate 3223a includes a piezoelectric pin 3223d. The piezoelectric pin 3223d and the conducting pin 3225a are electrically connected to a driving circuit (not shown) of the driving circuit board 323, so as to receive a driving signal, such as a driving frequency and a driving voltage. Through this structure, a circuit is formed by the piezoelectric pin 3223d, the piezoelectric carrying plate 3223a, the adjusting resonance plate 3223b, the piezoelectric plate 3223c, the conducting electrode 3225b, the conductive frame 3225 and the conducting pin 3225a for transmitting the driving signal. Moreover, the insulation frame 3224 is insulated between the conductive frame 3225 and the actuator element 3223, so as to avoid the occurrence of a short circuit. Thereby, the driving signal is transmitted to the piezoelectric plate 3223c. After receiving the driving signal such as the driving frequency and the driving voltage, the piezoelectric plate 3223c deforms due to the piezoelectric effect, and the piezoelectric carrying plate 3223a and the adjusting resonance plate 3223b are further driven to generate the bending deformation in the reciprocating manner.

Furthermore, in the embodiment, the adjusting resonance plate 3223b is located between the piezoelectric plate 3223c and the piezoelectric carrying plate 3223a and served as a cushion between the piezoelectric plate 3223c and the piezoelectric carrying plate 3223a. Thereby, the vibration frequency of the piezoelectric carrying plate 3223a is adjustable. Basically, the thickness of the adjusting resonance plate 3223b is greater than the thickness of the piezoelectric carrying plate 3223a, and the vibration frequency of the actuator element 3223 can be adjusted by adjusting the thickness of the adjusting resonance plate 3223b.

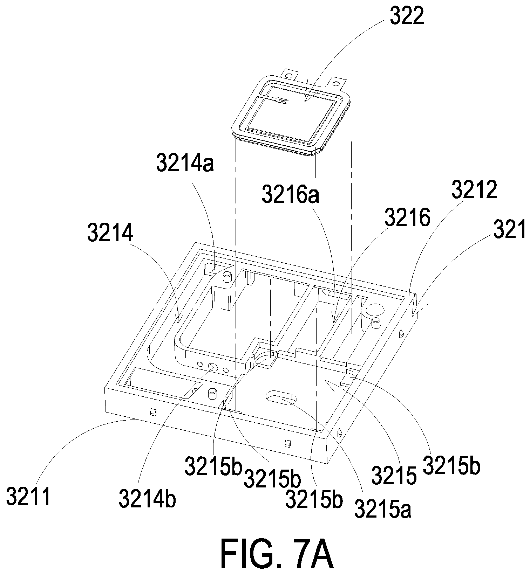

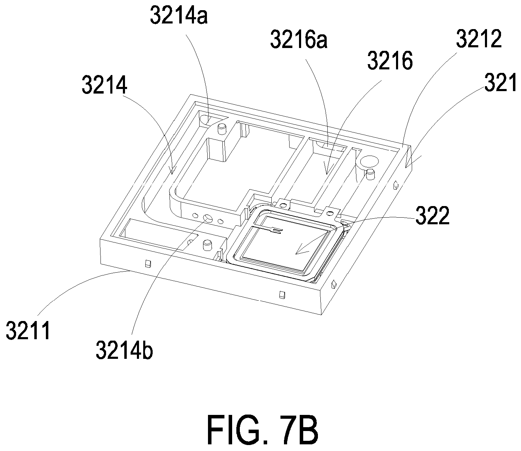

Please refer to FIG. 7A, FIG. 7B, FIG. 8A, FIG. 8B and FIG. 9A. In the embodiment, the gas-injection plate 3221, the chamber frame 3222, the actuator element 3223, the insulation frame 3224 and the conductive frame 3225 are stacked and positioned in the gas-guiding-component loading region 3215 sequentially, so that the piezoelectric actuator 322 is supported and positioned in the gas-guiding-component loading region 3215. A plurality of clearances 3221c are defined between the suspension plate 3221a of the gas-injection plate 3221 and an inner edge of the gas-guiding-component loading region 3215 for gas flowing therethrough. In the embodiment, a flowing chamber 3227 is formed between the gas-injection plate 3221 and the bottom surface of the gas-guiding-component loading region 3215. The flowing chamber 3227 is in communication with the resonance chamber 3226 between the actuator element 3223, the chamber frame 3222 and the suspension plate 3221a through the hollow aperture 3221b of the gas-injection plate 3221. By controlling the vibration frequency of the gas in the resonance chamber 3226 to be close to the vibration frequency of the suspension plate 3221a, the Helmholtz resonance effect is generated between the resonance chamber 3226 and the suspension plate 3221a, so as to improve the efficiency of gas transportation. When the piezoelectric plate 3223c is moved away from the bottom surface of the gas-guiding-component loading region 3215, the suspension plate 3221a of the gas-injection plate 3221 is driven to move away from the bottom surface of the gas-guiding-component loading region 3215 by the piezoelectric plate 3223c. In that, the volume of the flowing chamber 3227 is expanded rapidly, the internal pressure of the flowing chamber 3227 is decreased to form a negative pressure, and the gas outside the piezoelectric actuator 322 is inhaled through the clearances 3221c and enters the resonance chamber 3226 through the hollow aperture 3221b. Consequently, the pressure in the resonance chamber 3226 is increased to generate a pressure gradient. When the suspension plate 3221a of the gas-injection plate 3221 is driven by the piezoelectric plate 3223c to move toward the bottom surface of the gas-guiding-component loading region 3215, the gas in the resonance chamber 3226 is discharged out rapidly through the hollow aperture 3221b, and the gas in the flowing chamber 3227 is compressed, thereby the converged gas is quickly and massively ejected out of the flowing chamber 3227 under the condition close to an ideal gas state of the Benulli's law, and transported to the ventilation hole 3215a of the gas-guiding-component loading region 3215.

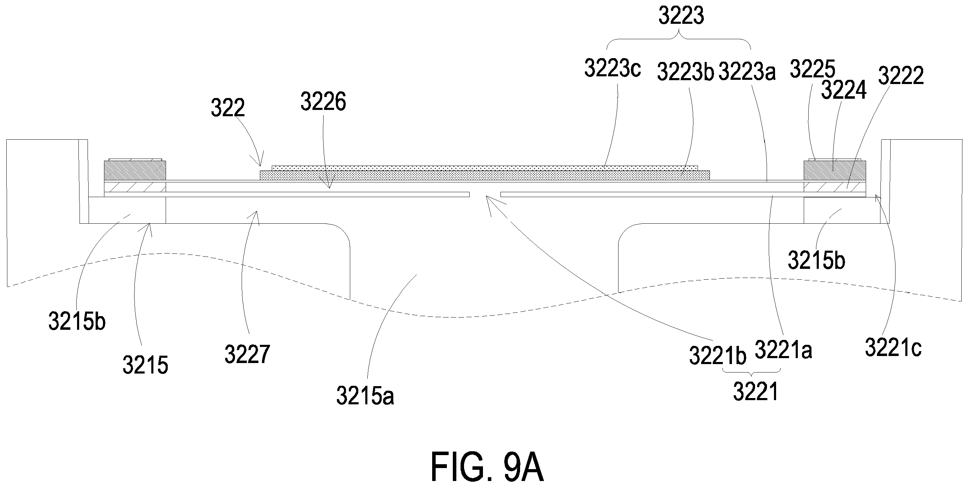

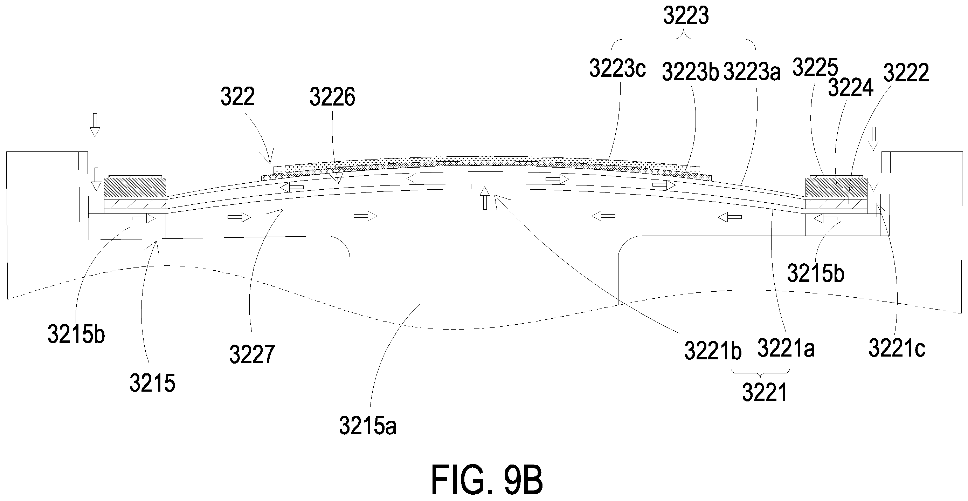

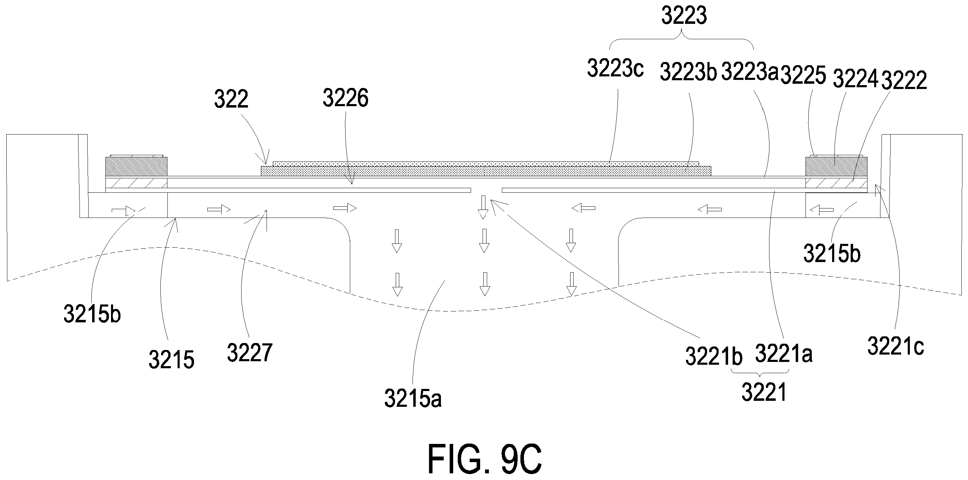

By repeating the above operation steps shown in FIG. 9B and FIG. 9C, the piezoelectric plate 3223c is driven to generate the bending deformation in a reciprocating manner. According to the principle of inertia, since the gas pressure inside the resonance chamber 3226 is lower than the equilibrium gas pressure after the converged gas is ejected out, the gas is introduced into the resonance chamber 3226 again. Moreover, the vibration frequency of the gas in the resonance chamber 3226 is controlled to be close to the vibration frequency of the piezoelectric plate 3223c, so as to generate the Helmholtz resonance effect to achieve the gas transportation at high speed and in large quantities. The gas is inhaled through the inlet opening 3261a of the outer cover 326, flows into the gas-inlet groove 3214 of the base 321 through the gas-inlet 3214a, and is transported to the position of the particulate sensor 325. The piezoelectric actuator 322 is enabled continuously to inhale the gas into the inlet path, and facilitate the gas outside the gas detection device to be introduced rapidly, flow stably, and transported above the particulate sensor 325. At this time, a projecting light beam emitted from the laser component 324 passes through the transparent window 3214b to irritate the suspended particles contained in the gas flowing above the particulate sensor 325 in the gas-inlet groove 3214. When the suspended particles contained in the gas are irradiated and generate scattered light spots, the scattered light spots are received and calculated by the particulate sensor 325 for obtaining related information about the sizes and the concentration of the suspended particles contained in the gas. Moreover, the gas above the particulate sensor 325 is continuously driven and transported by the piezoelectric actuator 322, flows into the ventilation hole 3215a of the gas-guiding-component loading region 3215, and is transported to the gas-outlet groove 3216. At last, after the gas flows into the gas outlet groove 3216, the gas is continuously transported into the gas-outlet groove 3216 by the piezoelectric actuator 322, and thus the gas in the gas-outlet groove 3216 is pushed to discharge through the gas-outlet 3216a and the outlet opening 3261b.

In the present disclosure, the gas detection device A of the central controller B can not only detect the suspended particles in the gas, but also further detect the characteristics of the imported gas, such as formaldehyde, ammonia, carbon monoxide, carbon dioxide, oxygen and ozone. Therefore, the gas detection device A of the central controller B of the present disclosure further includes a gas sensor 327. Preferably but not exclusively, the gas sensor 327 is positioned and electrically connected to the driving circuit board 323, and is accommodated in the gas outlet groove 3216. Whereby, the concentration or the characteristics of volatile organic compounds contained in the gas drained out through the outlet path.

In summary, the present invention provides a central controller for completely cleaning indoor air pollution. With the central controller disposed in an indoor space, the central controller detects air pollution in the indoor space and generates air pollution data, and process the air pollution data using the wireless communication. Then, the characteristic, the concentration and the location of the air pollution in the indoor space are intelligently determined, and the fan is intelligently driven to generate a directional air convection. Through the physical or chemical filtration elements, the air pollution in the indoor space is removed, so as to completely clean the indoor air pollution to form a clean and safe breathing air state in the indoor space. The present invention includes the industrial applicability and the inventive steps.

## Claims

1. A central controller (B) for completely cleaning indoor air pollution, wherein the central controller (B) is disposed in an indoor space to detect air pollution and output air pollution data, wherein the central controller (B) comprises a central processing unit (13), a communication interface (14) and a gas detection device (3), wherein the gas detection device (3) comprises a controlling circuit board (31), a gas detection main part (32), a microprocessor (33) and a communicator (34), and the gas detection main part (32), the microprocessor (33) and the communicator (34) are integrally packaged on the controlling circuit board (31) and electrically connected to the controlling circuit board (31), wherein the microprocessor controls (33) the detection of the gas detection main part (32), the gas detection main part (32) detects the air pollution and outputs a detection signal, and the microprocessor (33) receives and processes the detection signal to generate air pollution data and provides the air pollution data to the communicator (34) for a wireless communication transmission externally and outputs the air pollution data to the central processing unit (13), wherein intelligence operations are implemented in accordance with the air pollution data by the central processing unit (13) to determine a location of the air pollution, and a controlling instruction is intelligently and selectively issued by the communication interface (14) through a wireless communication transmission to enable a plurality of physical filtration devices (C) or a plurality of chemical filtration devices (C), wherein each of the physical filtration devices (C) or the chemical filtration devices (C) comprises at least one fan (11) and at least one filter element (12), wherein the fan (11) is driven upon receiving the controlling instruction, so as to generate an airflow convection in a direction, wherein the air pollution is removed through the filter element (12), so that the air pollution in the indoor space is completely cleaned to form a clean and safe breathing air state.

2. The central controller (B) for completely cleaning indoor air pollution according to claim 1, wherein the air pollution is at least one selected from the group consisting of suspended particulate matter, carbon monoxide, carbon dioxide, ozone, sulfur dioxide, nitrogen dioxide, lead, total volatile organic compounds (TVOC), formaldehyde, bacteria, fungi, virus and a combination thereof.

3. The central controller (B) for completely cleaning indoor air pollution according to claim 1, wherein the communication interface (14) is connected through a wireless communication transmission, and the wireless communication transmission is one selected from the group consisting of a Wi-Fi communication transmission, a Bluetooth communication transmission, a radio frequency identification communication transmission and a near field communication (NFC) transmission.

4. The central controller (B) for completely cleaning indoor air pollution according to claim 1, wherein the communication interface (14) is connected through a wired communication transmission.

5. The central controller (B) for completely cleaning indoor air pollution according to claim 1, wherein the central processing unit (13) implements the intelligence operations through a connection of a cloud device (E), so that artificial intelligence operations and big data comparison are implemented through the cloud device (E) to determine the location of the air pollution in the indoor space, wherein the controlling instruction is intelligently and selectively issued through the communication interface (14) to the plurality of the physical filtration devices (C) or the plurality of chemical filtration devices (C).

6. The central controller (B) for completely cleaning indoor air pollution according to claim 1, wherein the central processing unit (13) intelligently and selectively issues the controlling instruction through the communication interface (14) to enable a part of the plurality of physical filtration devices (C) or the plurality of chemical filtration devices (C) adjacent to the location of the air pollution first, and then intelligently and selectively issues the controlling instruction through the communication interface (14) to enable the rest of the plurality of physical filtration devices (C) or the plurality of chemical filtration devices (C), so as to generate the airflow convection, whereby the flow of the air pollution is accelerated to drain through the airflow convection toward the plurality of physical filtration devices (C) or the plurality of chemical filtration devices (C) adjacent to the location of the air pollution for filtering and cleaning the air pollution.

7. The central controller (B) for completely cleaning indoor air pollution according to claim 1, wherein the filter element (12) of the physical filtration device is a blocking and absorbing filter screen (124) to form a physical removal device.

8. The central controller (B) for completely cleaning indoor air pollution according to claim 7, wherein the filter screen (124) is a high efficiency particulate air (HEPA) filter screen.

9. The central controller (B) for completely cleaning indoor air pollution according to claim 1, wherein the filter element (12) of the chemical filtration device (C) is coated with a decomposition layer (121) to form a chemical removal device.

10. The central controller (B) for completely cleaning indoor air pollution according to claim 9, wherein the decomposition layer (121) is one selected from the group consisting of an activated carbon (121a), a cleansing factor containing chlorine dioxide layer (121b), an herbal protective layer (121c) extracted from ginkgo and Japanese rhus chinensis to form an herbal protective anti-allergic filter, a sliver ion (121d), a zeolite (121e) and a combination thereof.

11. The central controller (B) for completely cleaning indoor air pollution according to claim 1, wherein the filter element (12) of the chemical filtration device (C) is combined with a light irradiation element (122) to form a chemical removal device.

12. The central controller (B) for completely cleaning indoor air pollution according to claim 11, wherein the light irradiation element (122) is one selected from the group consisting of a photo-catalyst unit comprising a photo catalyst (122a) and an ultraviolet lamp (122b), a nanometer irradiation tube (122c) and a combination thereof.

13. The central controller (B) for completely cleaning indoor air pollution according to claim 1, wherein the filter element (12) of the chemical filtration device (C) is combined with a decomposition unit (123) to form a chemical removal device.

14. The central controller (B) for completely cleaning indoor air pollution according to claim 13, wherein the decomposition unit (123) is one selected from the group consisting of a negative ion unit (123a), a plasma ion unit (123b) and a combination thereof.

15. The central controller (B) for completely cleaning indoor air pollution according to claim 1, wherein the gas detection main part (32) comprises:
a base (321) comprising:
a first surface (3211);
a second surface (3212) opposite to the first surface (3211);
a laser loading region (3213) hollowed out from the first surface (3211) to the second surface (3212);
a gas-inlet groove (3214) concavely formed from the second surface (3212) and disposed adjacent to the laser loading region (3213), wherein the gas-inlet groove (3214) comprises a gas-inlet (3214a) and two lateral walls, the gas-inlet is in communication with an environment outside the base (321), and a transparent window (3214b) is opened on the two lateral walls and is in communication with the laser loading region (3213);
a gas-guiding-component loading region (3215) concavely formed from the second surface (3212) and in communication with the gas-inlet groove (3214), wherein a ventilation hole (3215a) penetrates a bottom surface of the gas-guiding-component loading region (3215);
and
a gas-outlet groove (3216) concavely formed from the first surface (3211), spatially corresponding to the bottom surface of the gas-guiding-component loading region (3215), and hollowed out from the first surface (3211) to the second surface (3212) in a region (3216c) where the first surface (3211) is not aligned with the gas-guiding-component loading region (3215), wherein the gas-outlet groove (3216) is in communication with the ventilation hole (3215a), and a gas-outlet (3216a) is disposed in the gas-outlet groove (3216);
a piezoelectric actuator (322) accommodated in the gas-guiding-component loading region (3215);
a driving circuit board (323) covering and attached to the second surface (3212) of the base (321);
a laser component (324) positioned and disposed on the driving circuit board (323), electrically connected to the driving circuit board (323), and accommodated in the laser loading region (3213), wherein a light beam path emitted from the laser component (324) passes through the transparent window (3214b) and extends in a direction perpendicular to the gas-inlet groove (3214), thereby forming an orthogonal direction with the gas-inlet groove (3214);
a particulate sensor (325) positioned and disposed on the driving circuit board (323), electrically connected to the driving circuit board (323), and disposed at an orthogonal position where the gas-inlet groove (3214) intersects the light beam path of the laser component (324) in the orthogonal direction, so that suspended particles of the air pollution source passing through the gas-inlet groove (3214) and irradiated by a projecting light beam emitted from the laser component (324) are detected;
a gas sensor (327) positioned and disposed on the driving circuit board (323), electrically connected to the driving circuit board (323), and accommodated in the gas-outlet groove (3216), so as to detect the air pollution source introduced into the gas-outlet groove (3216); and
an outer cover (326) covering the base (321) and comprising a side plate (3261), wherein the side plate (3261) has an inlet opening (3261a) and an outlet opening (3261b), the inlet opening (3261a) is spatially corresponding to the gas-inlet (3214a) of the base (321), and the outlet opening (3261b) is spatially corresponding to the gas-outlet (3216a) of the base (321);
wherein the outer cover (326) covers the base (321), and the driving circuit board (323) covers the second surface (3212), thereby an inlet path is defined by the gas-inlet groove (3214), and an outlet path is defined by the gas-outlet groove (3216), so that the air pollution source is inhaled from the environment outside the base (321) by the piezoelectric actuator (322), transported into the inlet path defined by the gas-inlet groove (3214) through the inlet opening (3261a), and passes through the particulate sensor (325) to detect the particle concentration of the suspended particles contained in the air pollution source, and the air pollution source transported through the piezoelectric actuator (322) is transported out of the outlet path defined by the gas-outlet groove (3216) through the ventilation hole (3215a), passes through the gas sensor (327) for detecting, and then discharged through the outlet opening (3261b).

16. The central controller (B) for completely cleaning indoor air pollution according to claim 15, wherein the particulate sensor (325) is used for detecting the suspended particulate information.

17. The central controller (B) for completely cleaning indoor air pollution according to claim 15, wherein the gas sensor (327) comprises a volatile-organic-compound sensor for detecting the gas information of carbon dioxide or total volatile organic compounds.

18. The central controller (B) for completely cleaning indoor air pollution according to claim 15, wherein the gas sensor (327) comprises one selected from the group consisting of a formaldehyde sensor, a bacteria sensor and a combination thereof, wherein the formaldehyde sensor detects the gas information of formaldehyde, and the bacteria sensor detects the gas information of bacteria or fungi.

19. The central controller (B) for completely cleaning indoor air pollution according to claim 15, wherein the gas sensor (327) comprises a virus sensor for detecting the gas information of virus.

## Patentansprüche

1. Zentrale Steuerung (B) zur vollständigen Reinigung von Innenraumluftverschmutzung, wobei die zentrale Steuerung (B) in einem Innenraum angeordnet ist, um Luftverschmutzung zu detektieren und um Luftverschmutzungsdaten auszugeben, wobei die zentrale Steuerung (B) eine zentrale Verarbeitungseinheit (13), eine Kommunikationsschnittstelle (14) und eine Gasdetektionsvorrichtung (3) umfasst, wobei die Gasdetektionsvorrichtung (3) eine Steuerschaltungsplatine (31), einen Gasdetektionshauptteil (32), einen Mikroprozessor (33) und einen Kommunikator (34) umfasst, und der Gasdetektionshauptteil (32), der Mikroprozessor (33) und der Kommunikator (34) integriert an der Steuerschaltungsplatine (31) vorgesehen und mit der Steuerschaltungsplatine (31) elektrisch verbunden sind, wobei der Mikroprozessor (33) das Detektieren des Gasdetektionshauptteils (32) steuert, der Gasdetektionshauptteil (32) die Luftverschmutzung detektiert und ein Detektionssignal ausgibt, und der Mikroprozessor (33) das Detektionssignal empfängt und verarbeitet, um Luftverschmutzungsdaten zu erzeugen, und die Luftverschmutzungsdaten an den Kommunikator (34) für eine drahtlose Kommunikationsübertragung nach außen liefert und die Luftverschmutzungsdaten an die zentrale Verarbeitungseinheit (13) ausgibt, wobei intelligente Operationen entsprechend den Luftverschmutzungsdaten von der zentrale Verarbeitungseinheit (13) implementiert werden, um einen Ort der Luftverschmutzung zu bestimmen, und ein Steuerbefehl von der Kommunikationsschnittstelle (14) durch eine drahtlose Kommunikationsübertragung intelligent und selektiv ausgegeben wird, um eine Mehrzahl von physischen Filtervorrichtungen (C) oder eine Mehrzahl von chemischen Filtervorrichtungen (C) zu aktivieren, wobei jede der physischen Filtervorrichtungen (C) oder der chemischen Filtervorrichtungen (C) mindestens einen Ventilator (11) und mindestens ein Filterelement (12) aufweist, wobei der Ventilator (11) bei Empfang des Steuerbefehls angetrieben wird, um so eine Luftströmungskonvektion in einer Richtung zu erzeugen, wobei die Luftverschmutzung durch das Filterelement (12) entfernt wird, so dass die Luftverschmutzung in dem Innenraum vollständig gereinigt wird, um einen sauberen und sicheren Atemluftzustand zu schaffen.

2. Zentrale Steuerung (B) zur vollständigen Reinigung von Innenraumluftverschmutzung nach Anspruch 1, wobei die Luftverschmutzung mindestens eine ist, die aus der Gruppe ausgewählt ist, die Schwebstoffe, Kohlenmonoxid, Kohlendioxid, Ozon, Schwefeldioxid, Stickstoffdioxid, Blei, gesamte flüchtige organische Verbindungen (TVOC), Formaldehyd, Bakterien, Pilze, Viren und eine Kombination davon enthält.

3. Zentrale Steuerung (B) zur vollständigen Reinigung von Innenraumluftverschmutzung nach Anspruch 1, wobei die Kommunikationsschnittstelle (14) durch eine drahtlose Kommunikationsübertragung verbunden ist, und die drahtlose Kommunikationsübertragung eine solche ist, die aus der Gruppe ausgewählt ist, die eine WiFi-Kommunikationsübertragung, eine Bluetooth-Kommunikationsübertragung, eine Radiofrequenz-Identifikations-Kommunikationsübertragung und eine Nahfeld-Kommunikationsübertragung (NFC-Übertragung) enthält.

4. Zentrale Steuerung (B) zur vollständigen Reinigung von Innenraumluftverschmutzung nach Anspruch 1, wobei die Kommunikationsschnittstelle (14) durch eine drahtgebundene Kommunikationsübertragung verbunden ist.

5. Zentrale Steuerung (B) zur vollständigen Reinigung von Innenraumluftverschmutzung nach Anspruch 1, wobei die zentrale Verarbeitungseinheit (13) die intelligenten Operationen durch eine Verbindung mit einer Cloud-Vorrichtung (E) implementiert, so dass Operationen basierend auf künstlicher Intelligenz und Big-Data-Vergleiche durch die Cloud-Vorrichtung (E) implementiert werden, um den Ort der Luftverschmutzung in dem Innenraum zu bestimmen, wobei der Steuerbefehl durch die Kommunikationsschnittstelle (14) an die Mehrzahl der physischen Filtervorrichtungen (C) oder an die Mehrzahl der chemischen Filtervorrichtungen (C) intelligent und selektiv ausgegeben wird.

6. Zentrale Steuerung (B) zur vollständigen Reinigen von Innenraumluftverschmutzung nach Anspruch 1, wobei die zentrale Verarbeitungseinheit (13) den Steuerbefehl durch die Kommunikationsschnittstelle (14) intelligent und selektiv ausgibt, um zunächst einen Teil der Mehrzahl von physischen Filtervorrichtungen (C) oder der Mehrzahl von chemischen Filtervorrichtungen (C) zu aktivieren, die sich in der Nähe des Ortes der Luftverschmutzung befinden, und dann den Steuerbefehl durch die Kommunikationsschnittstelle (14) intelligent und selektiv ausgibt, um den Rest der Mehrzahl von physischen Filtervorrichtungen (C) oder der Mehrzahl von chemischen Filtervorrichtungen (C) zu aktivieren, um so die Luftströmungskonvektion zu erzeugen, wodurch die Strömung der Luftverschmutzung beschleunigt wird, um durch die Luftströmungskonvektion in Richtung auf die Mehrzahl von physischen Filtervorrichtungen (C) oder die Mehrzahl von chemischen Filtervorrichtungen (C) in der Nähe des Ortes der Luftverschmutzung gesaugt zu werden, um die Luftverschmutzung zu filtern und zu reinigen.

7. Zentrale Steuerung (B) zur vollständigen Reinigung von Innenraumluftverschmutzung nach Anspruch 1, wobei das Filterelement (12) der physischen Filtervorrichtung ein blockierendes und absorbierendes Filtersieb (124) ist, um eine physische Entfernungsvorrichtung zu bilden.

8. Zentrale Steuerung (B) zur vollständigen Reinigung von Innenraumluftverschmutzung nach Anspruch 7, wobei das Filtersieb (124) ein HEPA-Filtersieb (High Efficiency Particulate Air Filtersieb) ist.

9. Zentrale Steuerung (B) zur vollständigen Reinigung von Innenraumluftverschmutzung nach Anspruch 1, wobei das Filterelement (12) der chemischen Filtervorrichtung (C) mit einer Zersetzungsschicht (121) beschichtet ist, um eine chemische Entfernungsvorrichtung zu bilden.

10. Zentrale Steuerung (B) zur vollständigen Reinigung von Innenraumluftverschmutzung nach Anspruch 9, wobei die Zersetzungsschicht (121) eine solche ist, die aus der Gruppe ausgewählt ist, die eine Aktivkohle (121a), eine Chlor-Dioxid enthaltende Reinigungsschicht (121b), eine aus Ginkgo und japanischem Rhus-Chinensis extrahierte Kräuterschutzschicht (121c) zur Bildung eines Kräuterschutz-Anti-Allergie-Filters, ein Silber-Ion (121d), ein Zeolith (121e) und eine Kombination davon enthält.

11. Zentrale Steuerung (B) zur vollständigen Reinigung von Innenraumluftverschmutzung nach Anspruch 1, wobei das Filterelement (12) der chemischen Filtervorrichtung (C) mit einem Lichtbestrahlungselement (122) kombiniert ist, um eine chemische Entfernungsvorrichtung zu bilden.

12. Zentrale Steuerung (B) zur vollständigen Reinigung von Innenraumluftverschmutzung nach Anspruch 11, wobei das Lichtbestrahlungselement (122) ein solches ist, das aus der Gruppe ausgewählt ist, die eine Fotokatalysatoreinheit mit einem Fotokatalysator (122a) und einer Ultraviolett-Lampe (122b), eine Nanometer-Bestrahlungsröhre (122c) und eine Kombination davon enthält.

13. Zentrale Steuerung (B) zur vollständigen Reinigung von Innenraumluftverschmutzung nach Anspruch 1, wobei das Filterelement (12) der chemischen Filtervorrichtung (C) mit einer Zersetzungseinheit (123) kombiniert ist, um eine chemische Entfernungsvorrichtung zu bilden.

14. Zentrale Steuerung (B) zur vollständigen Reinigung von Innenraumluftverschmutzung nach Anspruch 13, wobei die Zersetzungseinheit (123) eine solche ist, die aus der Gruppe ausgewählt ist, die eine Negativ-Ionen-Einheit (123a), eine Plasma-Ionen-Einheit (123b) und eine Kombination davon enthält.

15. Zentrale Steuerung (B) zur vollständigen Reinigung von Innenraumluftverschmutzung nach Anspruch 1, wobei der Gasdetektionshauptteil (32) umfasst:
eine Basis (321), umfassend:
eine erste Fläche (3211);
eine zweite Fläche (3212) gegenüber der ersten Fläche (3211);
eine Laseraufnahmeregion (3213), die von der ersten Fläche (3211) zur zweiten Fläche (3212) ausgehöhlt ist;
eine Gaseinlassnut (3214), die von der zweiten Fläche (3212) konkav ausgebildet und benachbart zur Laseraufnahmeregion (3213) angeordnet ist, wobei die Gaseinlassnut (3214) einen Gaseinlass (3214a) und zwei Seitenwände, wobei der Gaseinlass mit einer Umgebung außerhalb der Basis (321) in Verbindung steht, und ein transparentes Fenster (3214b) umfasst, das an den beiden Seitenwänden geöffnet ist und mit dem Laseraufnahmeregion (3213) in Verbindung steht;
ein Gasführungskomponenten-Aufnahmeregion (3215), die von der zweiten Fläche (3212) konkav ausgebildet ist und mit der Gaseinlassnut (3214) in Verbindung steht, wobei ein Belüftungsloch (3215a) eine Bodenfläche der Gasführungskomponenten-Aufnahmeregion (3215) durchdringt; und
eine Gasauslassnut (3216), die von der ersten Fläche (3211) konkav gebildet ist, räumlich der Bodenfläche der Gasführungskomponenten-Aufnahmeregion (3215) entspricht, und von der ersten Fläche (3211) zu der zweiten Fläche (3212) in eine Region (3216c) ausgehöhlt ist, wobei die erste Fläche (3211) nicht mit der Gasführungskomponenten-Aufnahmeregion (3215) ausgerichtet ist, wobei die Gasauslassnut (3216) mit dem Belüftungsloch (3215a) in Verbindung steht, und ein Gasauslass (3216a) in der Gasauslassnut (3216) angeordnet ist;
einen piezoelektrischen Aktuator (322), der in der Gasführungskomponenten-Aufnahmeregion (3215) untergebracht ist;
eine Steuerschaltungsplatine (323), die die zweite Fläche (3212) der Basis (321) überdeckt und an dieser befestigt ist;
eine Laserkomponente (324), die an der Steuerschaltungsplatine (323) positioniert und angeordnet ist, mit der Steuerschaltungsplatine (323) elektrisch verbunden ist, und in der Laseraufnahmeregion (3213) untergebracht ist, wobei ein von der Laserkomponente (324) emittierter Lichtstrahlweg durch das transparente Fenster (3214b) hindurchgeht und in einer Richtung senkrecht zur Gaseinlassnut (3214) verläuft, wodurch eine orthogonale Richtung zur Gaseinlassnut (3214) gebildet ist;
einen Partikelsensor (325), der an der Steuerschaltungsplatine (323) positioniert und angeordnet ist, mit der Steuerschaltungsplatine (323) elektrisch verbunden ist, und der an einer orthogonalen Position angeordnet ist, wo die Gaseinlassnut (3214) den Lichtstrahlweg der Laserkomponente (324) in der orthogonalen Richtung kreuzt, so dass Schwebstoffe der Luftverschmutzungsquelle, die durch die Gaseinlassnut (3214) hindurchtreten und von einem projizierten Lichtstrahl bestrahlt werden, der von der Laserkomponente (324) emittiert wird, erfasst werden;
einen Gassensor (327), der an der Steuerschaltungsplatine (323) positioniert und angeordnet ist, mit der Steuerschaltungsplatine (323) elektrisch verbunden ist, und in der Gasauslassnut (3216) untergebracht ist, um so die Luftverschmutzungsquelle zu erfassen, die in die Gasauslassnut (3216) eingeleitet wird; und
eine Außenabdeckung (326), die die Basis (321) überdeckt und eine Seitenplatte (3261) aufweist, wobei die Seitenplatte (3261) eine Einlassöffnung (3261a) und eine Auslassöffnung (3261b) aufweist, wobei die Einlassöffnung (3261a) räumlich dem Gaseinlass (3214a) der Basis (321) entspricht, und die Auslassöffnung (3261b) räumlich dem Gasauslass (3216a) der Basis (321) entspricht;
wobei die Außenabdeckung (326) die Basis (321) überdeckt, und die Steuerschaltungsplatine (323) die zweite Fläche (3212) überdeckt, wodurch ein Einlassweg durch die Gaseinlassnut (3214) definiert wird und ein Auslassweg durch die Gasauslassnut (3216) definiert wird, so dass die Luftverschmutzungsquelle von der Umgebung außerhalb der Basis (321) durch den piezoelektrischen Aktuator (322) angesaugt, durch die Einlassöffnung (3261a) in den durch die Gaseinlassnut (3214) definierten Einlassweg transportiert wird, und durch den Partikelsensor (325) geleitet wird, um die Partikelkonzentration der in der Luftverschmutzungsquelle enthaltenen Schwebstoffe zu erfassen, und die Luftverschmutzungsquelle, die durch den piezoelektrischen Aktuator (322) transportiert wird, aus dem Auslassweg, der durch die Gasauslassnut (3216) definiert ist, durch das Belüftungsloch (3215a) transportiert wird, zwecks Detektion durch den Gassensor (327) geleitet wird, und dann durch die Auslassöffnung (3261b) ausgegeben wird.

16. Zentrale Steuerung (B) zur vollständigen Reinigung von Innenraumluftverschmutzung nach Anspruch 15, wobei der Partikelsensor (325) zum Detektieren der Schwebstoff-Information verwendet wird.

17. Zentrale Steuerung (B) zur vollständigen Reinigung von Innenraumluftverschmutzung nach Anspruch 15, wobei der Gassensor (327) einen Sensor für flüchtige organische Verbindungen umfasst, um die Gas-Informationen von Kohlendioxid oder gesamten flüchtigen organischen Verbindungen zu erfassen.

18. Zentrale Steuerung (B) zur vollständigen Reinigung von Innenraumluftverschmutzung nach Anspruch 15, wobei der Gassensor (327) einen solchen umfasst, der aus der Gruppe ausgewählt ist, die einen Formaldehyd-Sensor, einen Bakterien-Sensor und eine Kombination davon enthält, wobei der Formaldehyd-Sensor die Gas-Information von Formaldehyd detektiert und der Bakterien-Sensor die Gas-Information von Bakterien oder Pilzen detektiert.

19. Zentrale Steuerung (B) zur vollständigen Reinigung von Innenraumluftverschmutzung nach Anspruch 15, wobei der Gassensor (327) einen Virus-Sensor zum Detektieren der Gas-Informationen von Viren umfasst.

## Revendications

1. Dispositif de commande central (B) pour l'élimination totale de la pollution de l'air intérieur, dans lequel le dispositif de commande central (B) est disposé dans un espace intérieur pour détecter la pollution de l'air et délivrer des données de pollution de l'air, dans lequel le dispositif de commande central (B) comprend une unité centrale de traitement (13), une interface de communication (14) et un dispositif de détection de gaz (3), dans lequel le dispositif de détection de gaz (3) comprend une carte de circuit imprimé de commande (31), une partie principale de détection de gaz (32), un microprocesseur (33) et un communicateur (34), et la partie principale de détection de gaz (32), le microprocesseur (33) et le communicateur (34) sont mis en boîtier d'un seul tenant sur la carte de circuit imprimé de commande (31) et connectés électriquement à la carte de circuit imprimé de commande (31), dans lequel le microprocesseur (33) commande la détection de la partie principale de détection de gaz (32), la partie principale de détection de gaz (32) détecte la pollution de l'air et délivre un signal de détection, et le microprocesseur (33) reçoit et traite le signal de détection pour générer des données de pollution de l'air et délivre les données de pollution de l'air au communicateur (34) pour une transmission sans fil externe, et transmet les données de pollution de l'air à l'unité centrale de traitement (13), dans lequel des opérations intelligentes sont mises en œuvre conformément aux données de pollution de l'air par l'unité centrale de traitement (13) pour déterminer un emplacement de la pollution de l'air, et une instruction de commande est émise de manière intelligente et sélective par l'interface de communication (14) par le biais d'une transmission sans fil pour activer une pluralité de dispositifs de filtration physique (C) ou une pluralité de dispositifs de filtration chimique (C), dans lequel chacun des dispositifs de filtration physique (C) ou des dispositifs de filtration chimique (C) comprend au moins un ventilateur (11) et au moins un élément filtrant (12), dans lequel le ventilateur (11) est entraîné lors de la réception de l'instruction de commande, de façon à générer une convection de flux d'air dans une direction, dans lequel la pollution de l'air est éliminée par le biais de l'élément filtrant (12), de sorte que la pollution de l'air dans l'espace intérieur soit totalement éliminée pour former un état d'air respirable propre et sûr.

2. Dispositif de commande central (B) pour l'élimination totale de la pollution de l'air intérieur selon la revendication 1, dans lequel la pollution de l'air comprend au moins un élément sélectionné dans le groupe consistant en des matières particulaires en suspension, du monoxyde de carbone, du dioxyde de carbone, de l'ozone, du dioxyde de soufre, du dioxyde d'azote, du plomb, des composés organiques volatils totaux (COVT), du formaldéhyde, des bactéries, des champignons, des virus et une combinaison de ceux-ci.

3. Dispositif de commande central (B) pour l'élimination totale de la pollution de l'air intérieur selon la revendication 1, dans lequel l'interface de communication (14) est connectée par le biais d'une transmission de communication sans fil, et la transmission de communication sans fil est l'une sélectionnée dans le groupe consistant en une transmission de communication Wi-Fi, une transmission de communication Bluetooth, une transmission de communication par identification par radiofréquence et une transmission de communication en champ proche (NFC).

4. Dispositif de commande central (B) pour l'élimination totale de la pollution de l'air intérieur selon la revendication 1, dans lequel l'interface de communication (14) est connectée par le biais d'une transmission de communication câblée.

5. Dispositif de commande central (B) pour l'élimination totale de la pollution de l'air intérieur selon la revendication 1, dans lequel l'unité centrale de traitement (13) met en œuvre les opérations d'intelligence par le biais d'une connexion à un dispositif en nuage (E), de sorte que des opérations d'intelligence artificielle et une comparaison de données volumineuses soient mises en oeuvre par le biais du dispositif en nuage (E) pour déterminer l'emplacement de la pollution de l'air dans l'espace intérieur, dans lequel l'instruction de commande est émise de manière intelligente et sélective par le biais de l'interface de communication (14) vers la pluralité de dispositifs de filtration physique (C) ou la pluralité de dispositifs de filtration chimique (C).

6. Dispositif de commande central (B) pour l'élimination totale de la pollution de l'air intérieur selon la revendication 1, dans lequel l'unité centrale de traitement (13) émet de manière intelligente et sélective des instructions de commande par le biais de l'interface de communication (14) pour activer d'abord une partie de la pluralité de dispositifs de filtration physique (C) ou de la pluralité de dispositifs de filtration chimique (C) adjacents à l'emplacement de la pollution de l'air, puis émet de manière intelligente et sélective des instructions de commande par le biais de l'interface de communication (14) pour activer le reste de la pluralité de dispositifs de filtration physique (C) ou de la pluralité de dispositifs de filtration chimique (C), de façon à générer la convection de flux d'air, moyennant quoi le flux de la pollution de l'air est accéléré pour s'écouler par le biais de la convection de flux d'air vers la pluralité de dispositifs de filtration physique (C) ou la pluralité de dispositifs de filtration chimique (C) adjacents à l'emplacement de la pollution de l'air pour filtrer et éliminer la pollution de l'air.

7. Dispositif de commande central (B) pour l'élimination totale de la pollution de l'air intérieur selon la revendication 1, dans lequel l'élément filtrant (12) du dispositif de filtration physique est un tamis filtrant de blocage et d'absorption (124) destiné à former un dispositif d'élimination physique.

8. Dispositif de commande central (B) pour l'élimination totale de la pollution de l'air intérieur selon la revendication 7, dans lequel le tamis filtrant (124) est un tamis filtrant haute efficacité pour les particules de l'air (HEPA).

9. Dispositif de commande central (B) pour l'élimination totale de la pollution de l'air intérieur selon la revendication 1, dans lequel l'élément filtrant (12) du dispositif de filtration chimique (C) est recouvert d'une couche de décomposition (121) pour former un dispositif d'élimination chimique.

10. Dispositif de commande central (B) pour l'élimination totale de la pollution de l'air intérieur selon la revendication 9, dans lequel la couche de décomposition (121) est sélectionnée dans le groupe consistant en un charbon actif (121a), une couche de dioxyde de chlore contenant un facteur nettoyant (121b), une couche protectrice à base de plantes (121c) extraite de ginkgo et de rhus chinensis japonais pour former un filtre antiallergique protecteur à base de plantes, un ion argent (121d), une zéolite (121e) et une combinaison de ceux-ci.

11. Dispositif de commande central (B) pour l'élimination totale de la pollution de l'air intérieur selon la revendication 1, dans lequel l'élément filtrant (12) du dispositif de filtration chimique (C) est combiné avec un élément d'irradiation de lumière (122) pour former un dispositif d'élimination chimique.

12. Dispositif de commande central (B) pour l'élimination totale de la pollution de l'air intérieur selon la revendication 11, dans lequel l'élément d'irradiation de lumière (122) est sélectionné dans le groupe consistant en une unité photocatalytique comprenant un photocatalyseur (122a) et une lampe ultraviolette (122b), un tube d'irradiation nanométrique (122c) et une combinaison de ceux-ci.

13. Dispositif de commande central (B) pour l'élimination totale de la pollution de l'air intérieur selon la revendication 1, dans lequel l'élément filtrant (12) du dispositif de filtration chimique (C) est combiné avec une unité de décomposition (123) pour former un dispositif d'élimination chimique.

14. Dispositif de commande central (B) pour l'élimination totale de la pollution de l'air intérieur selon la revendication 13, dans lequel l'unité de décomposition (123) est un élément sélectionné dans le groupe consistant en une unité d'ions négatifs (123a), une unité d'ions plasma (123b) et une combinaison de celles-ci.

15. Dispositif de commande central (B) pour l'élimination totale de la pollution de l'air intérieur selon la revendication 1, dans lequel la partie principale de détection de gaz (32) comprend:
une base (321) comprenant:
une première surface (3211);
une deuxième surface (3212) opposée à la première surface (3211);
une région de chargement laser (3213) évidée de la première surface (3211) à la deuxième surface (3212);
une rainure d'entrée de gaz (3214) formée de manière concave à partir de la deuxième surface (3212) et disposée adjacente à la région de chargement laser (3213), dans lequel la rainure d'entrée de gaz (3214) comprend une entrée de gaz (3214a) et deux parois latérales, l'entrée de gaz est en communication avec un environnement extérieur à la base (321), et une fenêtre transparente (3214b) est ouverte sur les deux parois latérales et en communication avec la région de chargement laser (3213);
une région de chargement de composant de guidage de gaz (3215) formée de manière concave à partir de la deuxième surface (3212) et en communication avec la rainure d'entrée de gaz (3214), dans lequel un trou de ventilation (3215a) pénètre une surface inférieure de la région de chargement de composant de guidage de gaz (3215); et
une rainure de sortie de gaz (3216) formée de manière concave à partir de la première surface (3211), correspondant spatialement à la surface inférieure de la région de chargement de composant de guidage de gaz (3215), et évidée de la première surface (3211) à la deuxième surface (3212) dans une région (3216c) où la première surface (3211) n'est pas alignée avec la région de chargement de composant de guidage de gaz (3215), dans lequel la rainure de sortie de gaz (3216) est en communication avec le trou de ventilation (3215a), et une sortie de gaz (3216a) est disposée dans la rainure de sortie de gaz (3216) ; un actionneur piézoélectrique (322) logé dans la région de chargement de composant de guidage de gaz (3215);
une carte de circuit imprimé d'excitation (323) recouvrant la deuxième surface (3212) de la base (321) et fixée à celle-ci;
un composant laser (324) positionné et disposé sur la carte de circuit imprimé d'excitation (323), connecté électriquement à la carte de circuit imprimé d'excitation (323), et logé dans la région de chargement laser (3213), dans lequel un trajet de faisceau lumineux émis par le composant laser (324) traverse la fenêtre transparente (3214b) et s'étend dans une direction perpendiculaire à la rainure d'entrée de gaz (3214), formant ainsi une direction orthogonale par rapport à la rainure d'entrée de gaz (3214);
un capteur de particules (325) positionné et disposé sur la carte de circuit imprimé d'excitation (323), connecté électriquement à la carte de circuit imprimé d'excitation (323), et disposé à une position orthogonale où la rainure d'entrée de gaz (3214) croise le trajet de faisceau lumineux du composant laser (324) dans la direction orthogonale, de sorte que des particules en suspension de la source de pollution de l'air traversant la rainure d'entrée de gaz (3214) et irradiées par un faisceau lumineux projeté émis par le composant laser (324) soient détectées;
un capteur de gaz (327) positionné et disposé sur la carte de circuit imprimé d'excitation (323), connecté électriquement à la carte de circuit imprimé d'excitation (323), et logé dans la rainure de sortie de gaz (3216), de façon à détecter la source de pollution de l'air introduite dans la rainure de sortie de gaz (3216); et
un couvercle externe (326) recouvrant la base (321) et comprenant une plaque latérale (3261), dans lequel la plaque latérale (3261) présente une ouverture d'entrée (3261a) et une ouverture de sortie (3261b), l'ouverture d'entrée (3261a) correspond spatialement à l'entrée de gaz (3214a) de la base (321), et l'ouverture de sortie (3261b) correspond spatialement à la sortie de gaz (3216a) de la base (321);
dans lequel le couvercle externe (326) recouvre la base (321), et la carte de circuit imprimé d'excitation (323) recouvre la deuxième surface (3212), un trajet d'entrée étant ainsi défini par la rainure d'entrée de gaz (3214) et un trajet de sortie étant ainsi défini par la rainure de sortie de gaz (3216), de sorte que la source de pollution de l'air soit inhalée depuis l'environnement extérieur à la base (321) par l'actionneur piézoélectrique (322), transportée dans le trajet d'entrée défini par la rainure d'entrée de gaz (3214) à travers l'ouverture d'entrée (3261a), traverse le capteur de particules (325) pour détecter la concentration en particules des particules en suspension contenues dans la source de pollution de l'air, et la source de pollution de l'air transportée par le biais de l'actionneur piézoélectrique (322) est transportée hors du trajet de sortie défini par la rainure de sortie de gaz (3216) à travers le trou de ventilation (3215a), traverse le capteur de gaz (327) à des fins de détection, puis est évacuée par l'ouverture de sortie (3261b).

16. Dispositif de commande central (B) pour l'élimination totale de la pollution de l'air intérieur selon la revendication 15, dans lequel le capteur de particules (325) est utilisé pour détecter les informations de particules en suspension.

17. Dispositif de commande central (B) pour l'élimination totale de la pollution de l'air intérieur selon la revendication 15, dans lequel le capteur de gaz (327) comprend un capteur de composés organiques volatils pour détecter les informations gazeuses de dioxyde de carbone ou de composés organiques volatils totaux.

18. Dispositif de commande central (B) pour l'élimination totale de la pollution de l'air intérieur selon la revendication 15, dans lequel le capteur de gaz (327) comprend un élément sélectionné dans le groupe consistant en un capteur de formaldéhyde, un capteur de bactéries et une combinaison de ceux-ci, dans lequel le capteur de formaldéhyde détecte les informations gazeuses de formaldéhyde, et le capteur de bactéries détecte les informations gazeuses de bactéries ou de champignons.

19. Dispositif de commande central (B) pour l'élimination totale de la pollution de l'air intérieur selon la revendication 15, dans lequel le capteur de gaz (327) comprend un capteur de virus pour détecter les informations gazeuses de virus.
